# EUROPÄISCHE PATENTSCHRIFT

(11) **EP 2 379 855 B1**
(45) Veröffentlichungstag und Bekanntmachung des Hinweises auf die Patenterteilung: **25.03.2015**
(21) Anmeldenummer: 09744666.0
(22) Anmeldetag: 22.10.2009
(51) Int. Cl.: F01N 3/20, B01D 53/94

(54) **DOSIERMODUL FÜR EIN FLÜSSIGES REDUKTIONSMITTEL**
METERING MODULE FOR A LIQUID REDUCING AGENT
MODULE DE DOSAGE POUR UN AGENT RÉDUCTEUR LIQUIDE

(30) Priorität: 22.12.2008 DE 102008055060
(43) Veröffentlichungstag der Anmeldung: 26.10.2011
(73) Patentinhaber: Robert Bosch GmbH, 70442 Stuttgart (DE)
(72) Erfinder: FEISTRITZER, Bernhard, A-5452 Pfarrwerfen (AT); FOETSCHL, Markus, A-5580 Unternberg (AT); PAPE, Werner, A-5400 Hallein (AT)
(86) Internationale Anmeldenummer: PCT/EP2009/063860
(87) Internationale Veröffentlichungsnummer: WO 2010/072440

(56) Entgegenhaltungen:
- WO-A-01/45827
- WO-A-02/079616

## Beschreibung

Die Erfindung betrifft ein Dosiermodul für ein flüssiges Reduktionsmittel in ein Abgasrohr einer Brennkraftmaschine nach dem Oberbegriff des Anspruchs 1. Außerdem ist Gegenstand der Erfindung ein Verfahren zum Betreiben einer Abgasnachbehandlungsvorrichtung nach dem Oberbegriff des entsprechenden nebengeordneten Patentanspruchs.

### Stand der Technik

Die vom Gesetzgeber geforderten Emissionsgrenzwerte für Stickoxide erfordern bei Kraftfahrzeugen Abgasnachbehandlungseinrichtungen, die bspw. eine selektive katalytische Reduktion (SCR) der in den Rohemissionen der Brennkraftmaschine enthaltenen Stickoxide vornehmen. Dieses sogenannte SCR-Verfahren zur Abgasreinigung ist aus dem Stand der Technik bekannt.

Ein Beispiel einer solchen Abgasnachbehandlungseinrichtung ist aus der WO 02 / 079616 A1 bekannt. Dort wird in einem Dosiermodul unter Verwendung eines in die Abgase einzubringenden Reduktionsmittels, vorzugsweise einer Harnstoff-Wasser-Lösung, über ein Dosierventil das flüssige Reduktionsmittel und zusätzlich Druckluft in eine Mischkammer eingebracht. In der Mischkammer entsteht daraus ein Reduktionsmittel-Luft-Gemisch, welches in ein Abgasrohr eingebracht wird.

Um zu verhindern, dass Reduktionsmittel oder Reduktionsmittel-Luft-Gemisch aus der Mischkammer in eine Druckluftleitung zurückströmt, ist ein Rückschlagventil vorgesehen.

Das Dosiermodul umfasst das Dosierventil und die Mischkammer, wobei die Mischkammer üblicherweise in einem Gehäuse aus korrosionsbeständigem Stahl angeordnet ist, in welchem eine Profildichtung aus einem Elastomer, bspw. "Fluor-Silikon" eingesetzt ist. Die Dichtung dient als Rückschlagventil, so dass die Druckluft in die Mischkammer gelangen kann, aber möglichst keine Harnstoff-Wasser-Lösung in den Druckluftbereich gelangen kann. Diese Abgrenzung ist notwendig, da einerseits bei einer Trocknung der Harnstoff-Wasser-Lösung Harnstoffkristalle abgeschieden werden können, welche zu einer Verstopfung einer Druckluftleitung führen können und andererseits die Harnstoff-Wasser-Lösung durch eine mögliche Abspaltung von Ammoniak auf Teile im Luftsystem stark korrosiv wirken kann.

Die Profildichtung kann jedoch durch thermische und chemische Alterung, sowie durch Fremdpartikel in der Druckluft undicht werden. Dies führt besonders dann zu Folgeschäden, wenn die Harnstoff-Wasser-Lösung durch eine strömungstechnisch ungünstige Geometrie oder Einbaulage der Mischkammer bereits im normalen Dosierbetrieb an der Profildichtung anliegt und bspw. durch Kapillarkräfte in den Druckluftbereich gelangt.

Die Harnstoff-Wasser-Lösung wird üblicherweise derzeit über ein mit 4 Hz getaktetes Dosierventil mit einem Druck von ca. 4,5 bar eingespritzt. Druckbetätigte, also passive Dosierventile sind allerdings auch im Einsatz. Die Druckluft wird mit einem Druck zwischen 4 bar und 8 bar in die Mischkammer eingeblasen. Durch den Luftdruck wird in der Regel das untere Ende der elastischen Profildichtung zusammengedrückt, wodurch eine Ringöffnung für den Luftstrom entsteht.

Das Reduktionsmittel-Luft-Gemisch verlässt die Mischkammer über eine Dosierleitung und ein Sprührohr, wo es in weiterer Folge in den Abgastrakt eingesprüht wird.

### Offenbarung der Erfindung

Aufgabe der Erfindung ist es, ein Dosiermodul der eingangs genannten Art weiterzuentwickeln, bei dem ein ungewollter Rückfluss der Harnstoff-Wasser-Lösung in den Druckluftbereich verhindert wird und die Funktionalität des Dosiermoduls nicht beeinträchtigt wird. Gleichzeitig sollen Zuverlässigkeit und Lebensdauer erhöht werden.

Die Aufgabe wird durch ein Dosiermodul mit den Merkmalen des Anspruch 1 sowie durch ein Verfahren zum Betreiben einer Abgasnachbehandlungsvorrichtung mit dem Merkmal des nebengeordneten Patentanspruchs gelöst,. Für die Erfindung wichtige Merkmale finden sich ferner in der nachfolgenden Beschreibung und in der Zeichnung, wobei die Merkmale sowohl in Alleinstellung als auch in unterschiedlichen Kombinationen für die Erfindung wichtig sein können, ohne dass hierauf jeweils explizit hingewiesen wird. Vorteilhafte Weiterbildungen finden sich in den Unteransprüchen.

Der Erfindung liegt die Idee zu Grunde, das Dosiermodul so auszubilden, dass weder im Betrieb noch im Stillstand Harnstoff-Wasser-Lösung in den Bereich der Profildichtung gelangt. Damit wird die Bildung von Harnstoffkristallen im Bereich der Luftzuführung des Dosiermoduls verhindert. Durch das Einfügen eines Leitrohres für die Harnstoff-Wasser-Lösung in eine Mittenbohrung der Profildichtung wird die Benetzung einer Dichtlippe der Profildichtung im normalen Dosierbetrieb verhindert, so dass die Austrittsöffnung des Leitrohrs weit von der Dichtlippe entfernt ist.

Eine vorteilhafte Einbaulage des Dosiermoduls kann die Funktion unterstützen. Da sich das Leitrohr bis in einen Bereich mit dem geringsten Querschnitt in der Mischkammer erstrecken kann, ist dadurch sichergestellt, dass die Summe aus einem Einströmquerschnitt der Luft und einem Einströmquerschnitt für die Harnstoff-Wasser-Lösung geringer ist, als ein Abströmquerschnitt für das Luft-Harnstoff-Wasser-Lösungs-Gemisch. Damit ergibt sich vorteilhafterweise ein Unterdruck im Mischbereich gegenüber dem Luftbereich, womit ein Rückströmen der Harnstoff-Wasser-Lösung zur Profildichtung im normalen Betrieb verhindert wird.

Eine gewünschte axiale Positionierung des Leitrohres und eine weitere Verbesserung der Abdichtungseigenschaften wird dadurch gewährleistet, dass das Leitrohr an seinem der Mischkammer gegenüberliegenden Ende einen Flansch aufweist, und dass das Leitrohr mit seinem Flansch gegenüber der Profildichtung, insbesondere in einer Nut der Profildichtung, abgedichtet wird. Die Position des Flansches kann dabei die axiale Positionierung des Leitrohres in der Profildichtung bestimmen und kann durch einen vorgegebenen Abstand des Dosierventils von der Profildichtung und/oder durch eine umlaufende Nut in der Profildichtung erreicht werden. Im zweiten Fall ist es von Vorteil, wenn die Profildichtung durch eine umlaufende Nut in einem Gehäuse der Mischkammer axial positioniert wird.

Vorteilhaft ist weiterhin, wenn die Profildichtung eine Dichtlippe aufweist, bei der in Richtung zur Mischkammer hin die Dichtlippe einen Winkel größer oder gleich 90° zu einer Außenwand der Mischkammer aufweist. Zum Druckluftbereich hin weist die Dichtlippe bevorzugt einen spitzen Winkel auf. Dies ermöglicht, dass die Luft von der Druckluftseite her die Dichtlippe öffnen kann, andererseits sperrt die Dichtlippe bei einem Überdruck in der Mischkammerseite. Die Dichtlippe wirkt dabei als Rückschlagventil. So kann darüber hinaus in einem Fehlerfall bei einer eventuell undichten Druckluftleitung verhindert werden, dass die Harnstoff-Wasser-Lösung durch den in der Mischkammer herrschenden hohen Druck in den Luftkreis hineingedrückt wird und durch Auskristallisieren der Harnstoff-Wasser-Lösung den Luftkreis verstopft.

Lebensdauer und Zuverlässigkeit des Dosiermoduls können noch weiter verbessert werden, wenn das Leitrohr und/oder eine innere Oberfläche der Mischkammer aus Kunststoff, insbesondere Polytetrafluorethylen (PTFE), Perfluorethylenpropylen (FEP) oder Perfluoralkoxylalkan (PFA) hergestellt bzw. mit den genannten Kunststoffen beschichtet ist. Dadurch wird ein "Rückkriechen" von Resten der Harnstoff-Wasser-Lösung durch das Dosiermodul verhindert, da die Oberflächenspannung insbesondere bei Polytetrafluorethylen (PTFE) extrem niedrig ist und so die Kapillarwirkung wesentlich reduziert ist. FEP und PFA zeichnen sich dadurch aus, dass sie ähnliche Oberflächeneigenschaften wie PTFE aufweisen, aber billiger und warmverformbar sind. Eine vorteilhafte Ausgestaltung des Leitrohres kann auch darin bestehen, dass das Leitrohr aus einem mit einem der oben genannten Kunststoffen beschichteten Metallrohr hergestellt ist.

Eine weitere vorteilhafte Ausführung des Dosiermoduls zeichnet sich dadurch aus, dass in das Gehäuse eine Buchse aus Kunststoff, PTFE, FEP oder PFA eingesetzt ist. Ein Vorteil dieser Ausführung liegt darin, dass in eingebautem Zustand der Hohlraum unterhalb der Profildichtung über das untere Ende der Buchse von der Mischkammer getrennt ist und damit die Profildichtung nicht von der Harnstoff-Wasser-Lösung benetzt wird. Dadurch ist eine geringere Korrosionsbeständigkeit der Mischkammer notwendig, was die Materialkosten vorteilhafterweise reduziert. Die Buchse kann derart ausgeführt werden, dass das Leitrohr in dieser geführt wird und Strömungskanäle für eine gezielte Führung der Luft ausgebildet sind. Dies ermöglicht eine kompakte und wirkungsvolle Ausführung des Dosiermoduls, wobei z.B. drei über den Umfang verteilte Strömungskanäle bevorzugt sind.

Damit in jeder erlaubten Einbaulage des Dosiermoduls Tropfen der Harnstoff-Wasser-Lösung abfließen können, ist es vorteilhaft, wenn ein innerer Boden der Buchse abgeschrägt ist. Je nach konstruktiver Ausführung der Verschraubung mit einem Abgasrohr bzw. des Bereiches unterhalb der Buchse in Richtung des Abgasrohrs, kann zusätzlich ein Ausgleichsvolumen vorgesehen werden. In diesem kann sich noch in der Dosierleitung befindliche Harnstoff-Wasser-Lösung sammeln, sofern sie beim Abschalten des Systems nicht vollständig über das Leitrohr entfernt wurde. Beim Vorsehen eines entsprechenden Ausgleichsvolumens reicht das Leitrohr bis zum unteren Ende des Ausgleichsvolumens.

In einem Verfahren zum Betreiben einer Abgasbehandlungsvorrichtung mit dem erfindungsgemäßen Dosiermodul kann zusätzlich durch eine entsprechende Steuerung erreicht werden, dass das Dosierventil und ein Entlüftungsventil der vorgelagerten Fördereinrichtung nach einem Abstellen des Systems kurzzeitig geöffnet wird. Dadurch entsteht vorteilhafterweise ein Unterdruck im der Leitung für das flüssige Reduktionsmittel, so dass Reste der Harnstoff-Wasser-Lösung in der Dosierleitung in das Leitrohr gedrückt und über das Dosierventil aus dem Dosiermodul entfernt werden können.

Nachfolgend werden anhand der Figuren Ausführungsbeispiele der Erfindung beispielhaft erläutert. Es zeigen:
- Figur 1: eine schematische Darstellung einer Brennkraftmaschine mit einer Abgasnachbehandlungseinrichtung;
- Figur2: ein erfindungsgemäßes Dosiermodul in einem Vertikalschnitt und in einer ersten Ausführungsform;
- Figur3: Detail III aus dem Dosiermodul von Figur 2;
- Figur4: ein erfindungsgemäßes Dosiermodul in einem Vertikalschnitt und in einer zweiten Ausführungsform; und
- Figur 5: ein Schnitt A - A an dem Dosiermodul von Figur 4.

### Detaillierte Beschreibung

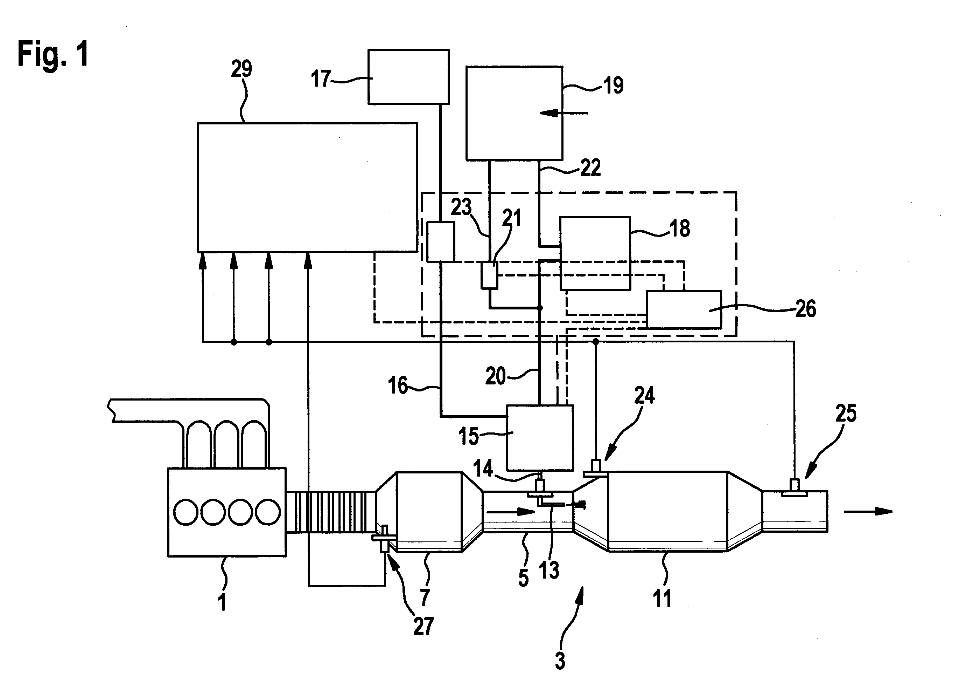

In Figur 1 ist eine Brennkraftmaschine 1 mit einer Abgasnachbehandlungseinrichtung 3 stark vereinfacht und schematisch dargestellt. Die Abgasnachbehandlungseinrichtung 3 umfasst ein Abgasrohr 5, einen Oxidationskatalysator 7 und einen SCR-Katalysator 11. Nicht dargestellt ist ein Partikelfilter, der üblicherweise stromabwärts des Oxidationskatalysators 7 angeordnet wird. Die Strömungsrichtung des Abgases durch das Abgasrohr 5 ist durch Pfeile (ohne Bezugszeichen) angedeutet.

Um den SCR-Katalysator 11 mit einem Reduktionsmittel, z.B. einer Harnstoff-Wasser-Lösung zu versorgen, ist stromaufwärts des SCR-Katalysators 11 am Abgasrohr 5 ein Sprührohr 13 für die Harnstoff-Wasser-Lösung angeordnet. Das Sprührohr 13 spritzt bei Bedarf mittels Druckluft die Harnstoff-Wasser-Lösung stromaufwärts des SCR-Katalysators 11 in das Abgasrohr 5 ein. Das Sprührohr 13 ist über eine Dosierleitung 14 mit dem Dosiermodul 15 verbunden. Dazu ist an dem Dosiermodul 15 eine Druckleitung 16 zum Zuführen von Druckluft von einer Drucklufterzeugungseinheit 17 oder einem Druckluftbehälter vorgesehen.

Das gesamte Dosiersystem umfasst neben dem Sprührohr 13, der Dosierleitung 14, dem Dosiermodul 15, eine Dosierpumpe 18 sowie einen Speicherbehälter 19 für die Harnstoff-Wasser-Lösung. Zwischen der Dosierpumpe 18 und dem Dosiermodul 15 ist eine erste Leitung (Reduktionsmittelzuführleitung) 20 vorgesehen. Das Dosiersystem umfasst zusätzlich ein Entlüftungsventil 21. Zwischen dem Speicherbehälter 19 und der Dosierpumpe 18 ist eine zweite Leitung 22 vorgesehen.

Von der ersten Leitung 20 zweigt eine Rücklaufleitung 23 mit dem Entlüftungsventil 21 ab. Über die Rücklaufleitung 23 wird überschüssige Harnstoff-Wasser-Lösung in den Speicherbehälter 19 zurückgeführt. Selbstverständlich könnte die Rücklaufleitung 23 auch vom Dosiermodul 15 oder der Dosierpumpe 18 abzweigen.

Der Vollständigkeit halber sei noch auf die in der Abgasanlage angeordneten Sensoren, nämlich einen Stickoxid-Sensor 25, sowie Temperatur-Sensoren 24 und 27 hingewiesen. Diese Sensoren 24, 25 und 27 sind über Signalleitungen (ohne Bezugszeichen) mit einem Steuergerät 29 der Brennkraftmaschine 1 verbunden. Das Steuergerät 29 steuert die Brennkraftmaschine 1 und sendet und empfängt Daten von dem Steuergerät des Dosiersystems 26. Die Signalverbindungen von und zum Steuergerät des Dosiersystems 26 sind in Figur 1 durch punktierte Linien dargestellt.

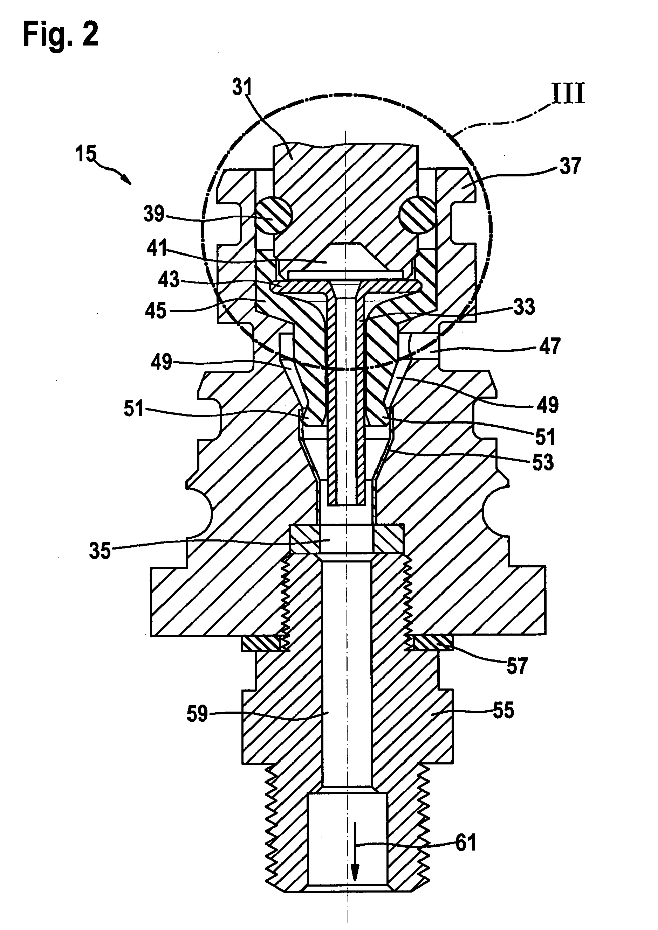

Figur 2 zeigt das Dosiermodul 15 in einer ersten erfindungsgemäßen Ausführungsform in einem Vertikalschnitt. Das erfindungsgemäße Dosiermodul 15 umfasst im Wesentlichen ein Dosierventil 31, ein Leitrohr 33 und eine Mischkammer 35. Das Dosierventil 31 wird vom Steuergerät 26 gesteuert. Passive, druckbetätigte Dosierventile sind allerdings auch im Einsatz. Das Dosierventil 31 ist in Figur 2 von oben in ein Gehäuse 37 des Dosiermoduls 15 eingelassen. Zur Positionierung und Abdichtung des Dosierventils 31 dient ein O-Ring 39. An einem Auslassbereich 41 des Dosierventils 31 liegt ein Flansch 43 des Leitrohrs 33 an. Das Leitrohr 33 befindet sich in einer Mittenbohrung der Profildichtung 45 im Gehäuse 37, wobei das Leitrohr 33 aus der Profildichtung 45 heraus in die Mischkammer 35 hineinragt. Der (Außen)-Durchmesser des Leitrohrs 33 und der Innendurchmesser der Profildichtung 45 müssen derart bemessen und aufeinander abgestimmt werden, dass ein Zusammenziehen der Profildichtung 45 beim Öffnen nicht behindert wird.

Im Bereich der Profildichtung 45 ist ein Anschluss 47 für die Luft-Druckleitung 16 (siehe Fig. 1) vorgesehen. Zwischen der Profildichtung 45 und dem Gehäuse 37 ist ein Zwischenraum 49 für die einströmende Druckluft angeordnet. Die Profildichtung 45 weist in Figur 2 am unteren Ende eine elastische Dichtlippe 51 auf, die den Zwischenraum 49 nach unten abschließt, also an einer inneren Oberfläche des Gehäuse 37 anliegt. Die Dichtlippe 51 ist dabei derart ausgestaltet, dass die Stirnseite der Dichtlippe 51 im Wesentlichen in einem stumpfen Winkel zu der inneren Oberfläche des Gehäuses 37 zeigt. In Folge dessen weist die Dichtlippe 51 zum Zwischenraum 49 einen spitzen Winkel auf. Dadurch hat die Dichtlippe 51 auch die Funktion eines Rückschlagventils.

In dem Bereich in dem die Dichtlippe 51 am Gehäuse 37 anliegt, weist die innere Oberfläche des Gehäuses 37 eine Kunststoffbeschichtung 53 auf. Die Beschichtung 53 verläuft an der inneren Oberfläche des Gehäuses 37 bis über das Ende des Leitrohrs 33 hinaus. Das Gehäuse 37 ist dabei so ausgestaltet, dass sich der Querschnitt der Mischkammer 35 verjüngt. Als Material für die Kunststoffbeschichtung eignen sich bspw. Polytetrafluorethylen PTFE, Perfluorethylenpropylen FEP oder Perfluoralkoxylalkan PFA.

Das Gehäuse 37 ist in Strömungsrichtung mit einer Verschraubung 55 verbunden. Ein Dichtring 57 sorgt für die nötige Abdichtung der Verbindungsstelle. Die Verschraubung 55 weist mittig eine Bohrung 59 auf, die eine Verlängerung der Mischkammer 35 darstellt und an einem unteren Ende in Figur 2 in einer Dosierleitung 61 für die Harnstoff-Wasser-Lösung mündet.

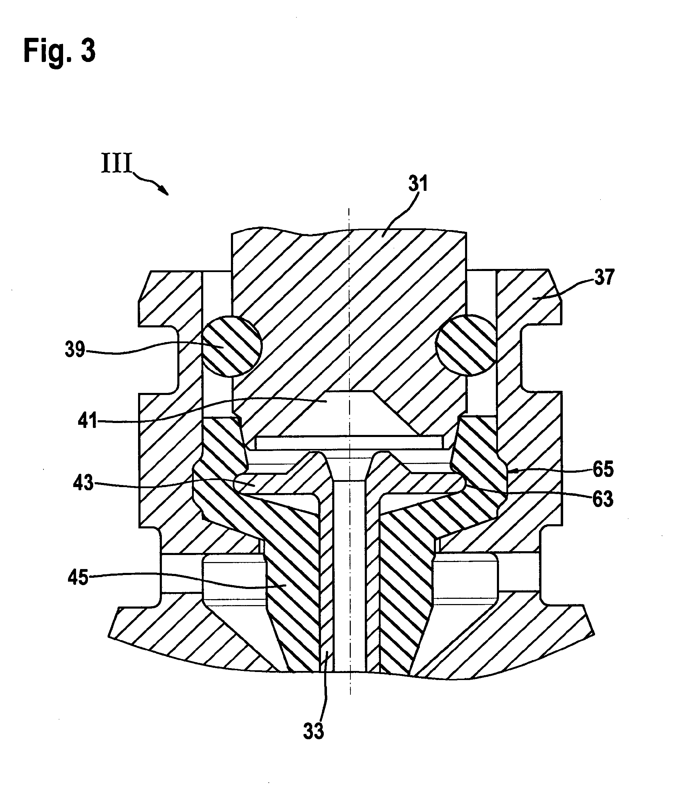

Anhand von Figur 3, die den Bereich III aus Figur 2 im Detail zeigt, wird die Arretierung des Leitrohrs 33 näher erläutert. Dazu ist im Bereich des Auslassbereichs 41 des Dosierventils 31 in der Profildichtung 45 eine Nut 63 vorgesehen, in die der Flansch 43 des Leitrohrs 33 eingesetzt ist. Durch die Lage der Nut 63 wird die Positionierung des Leitrohrs 33 festgelegt. Da die Profildichtung 45 selbst ein separates Element im Dosiermodul 15 ist, wird die Profildichtung 45 durch eine Nut 65 im Gehäuse 37 gehalten, in die die Profildichtung 45 eingelassen ist.

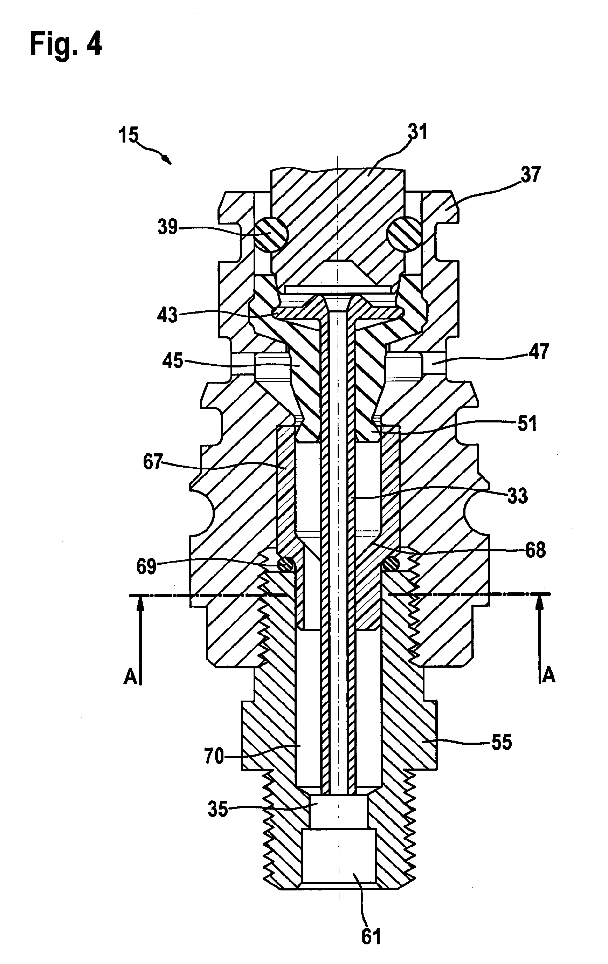

Figur 4 zeigt das Dosiermodul 15 in einer zweiten Ausführungsform in einem Vertikalschnitt. Dabei gilt, dass solche Elemente und Bereiche, welche funktionsäquivalent sind zu Elementen und Bereichen des Dosiermoduls 15 von Figur 2 oder 3, die gleichen Bezugszeichen tragen und nicht nochmals im Detail erläutert werden. Der Bereich des Dosierventils 31 und der Arretierung des Leitrohres 33 ist identisch mit den Ausführungen von Figur 2 oder 3. Der wesentliche Unterschied zu Figur 2 oder 3 besteht darin, dass das Leitrohr 33 neben der Führung in der Profildichtung 45 zusätzlich zumindest teilweise von einer Buchse 67, die aus Kunststoff, wie z.B. Polytetrafluorethylen PTFE, Perfluorethylenpropylen FEP oder Perfluoralkoxylalkan PFA gefertigt ist, geführt wird.

Die Buchse 67 ist in Figur 4 im Wesentlichen unterhalb der Profildichtung 45 angeordnet, jedoch in der Weise, dass die Dichtlippe 51 der Profildichtung 45 an einer Innenseite der Buchse 67 anliegt. In diesem Bereich ist die Buchse 67 weit geöffnet, dass sie noch nicht in der Lage ist, das Leitrohr 33 zu führen. Weiterfolgend in Strömungsrichtung verengt sich die Buchse 67 auf den Durchmesser des Leitrohrs 33 durch eine schräg ausgebildete Verjüngung 68. Ein weiterer Unterschied zu Figur 2 oder 3 ist der, dass das Leitrohr 33 wesentlich länger ausgestaltet ist, so dass die Mischkammer 35 nahe an der Dosierleitung 61, also in der Verschraubung 55 liegt. Die Verschraubung 55 ist mittels eines O-Rings 69 gegenüber dem Gehäuse 37 abgedichtet. In der Verschraubung 55 ist axial seitlich neben dem Leitrohr 33 ein Ausgleichsvolumen vorgesehen. In diesem Ausgleichsvolumen 70 kann sich noch in der Dosierleitung 61 befindliche Harnstoff-Wasser-Lösung sammeln, sofern sie beim Abschalten des Systems nicht vollständig über das Leitrohr 33 entfernt werden konnte. Das Leitrohr 33 reicht dabei bis zum unteren Ende des Ausgleichsvolumens 70.

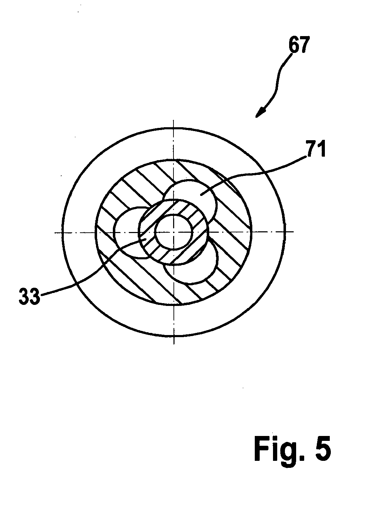

Figur 5 zeigt einen Schnitt A - A aus Figur 4 und zeigt den Innenaufbau der Buchse 67. Zentral in der Mitte der Buchse 67 ist das Leitrohr 33 eingelassen. Drei parallel zum Leitrohr 33 verlaufende, im Wesentlichen halbrunde Strömungskanäle 71 sind gleichmäßig über den Umfang der Buchse 67 verteilt, wobei eine Außenwandung des Leitrohrs 33 bereichsweise die Strömungskanäle 71 begrenzt.

Das Dosiermodul 15 in der ersten Ausführungsform funktioniert folgendermaßen: Die Harnstoff-Wasser-Lösung wird von dem Speicherbehälter 19 über die Dosierpumpe 18 dem Dosiermodul 15 zugeführt. Das Dosierventil 31 dosiert die gewünschte Menge an Harnstoff-Wasser-Lösung in das Dosiermodul. Die Einspritzmenge gelangt über das Leitrohr 33 in die Mischkammer 35. Da das Leitrohr 33 aus einem Kunststoff mit einer sehr niedrigen Oberflächenspannung hergestellt ist, läuft nahezu die gesamte Einspritzmenge in die Mischkammer 33. Gleichzeitig wird Druckluft über die Druckleitung 16 zum Anschluss 47 des Dosiermoduls 15 gefördert. Die Druckluft gelangt in den Zwischenraum 49 und öffnet bei einem Überschreiten einer definierten Druckdifferenz zwischen Zwischenraum 49 und Mischkammer 35 die Dichtlippe 51. Damit gelangt die Druckluft in die Mischkammer 35. Dort vermischen sich Druckluft und Reduktionsmittel und gelangen in die Dosierleitung 61 und von dort in das Abgasrohr 5.

Durch die Länge des Leitrohrs 33 und der Beschichtung 53 der Mischkammer 35 im Bereich der Anliegposition der Dichtlippe 51 bis unterhalb des Endes des Leitrohres 33 mit Kunststoff, der eine sehr niedrige Oberflächenspannung aufweist, wird verhindert, dass Reste von Harnstoff-Wasser-Lösung in den Bereich der Dichtlippe 51 und weiter in den Druckluftbereich gelangen. Durch eine entsprechend ausgerichtete Einbaulage des Dosiermoduls 15 wird ein Abfließen der Harnstoff-Wasser-Lösung in das Ausgleichsvolumen 70 unterstützt. Somit wird verhindert, dass sich Harnstoffkristalle im Druckluftbereich festsetzen und dort Verstopfungen hervorrufen.

Unterstützt wird dies noch dadurch, dass in einem in dem Steuergerät 26 hinterlegten Verfahren zum Betreiben einer Abgasnachbehandlungsvorrichtung 3 vorgesehen ist, dass das Dosierventil 31 und das Entlüftungsventil 21 der Dosierpumpe 18 nach einem Abstellen des Systems zu einem Druckausgleich kurzzeitig geöffnet wird, so dass eine Sogwirkung entsteht. Dadurch werden Reste der Harnstoff-Wasser-Lösung in der Dosierleitung 61 in das Leitrohr 33 gedrückt und über das Dosierventil 31 aus dem Dosiermodul 15 entfernt.

## Patentansprüche

1. Dosiermodul (15) für ein flüssiges Reduktionsmittel, insbesondere einer Harnstoff-Wasser-Lösung, zum Mischen des flüssigen Reduktionsmittels mit einem Gas, insbesondere Luft, zur weiteren Einleitung in ein Abgasrohr (5) einer Brennkraftmaschine (1), das Dosiermodul (15) umfassend ein Dosierventil (31) und eine Mischkammer (35), wobei das Dosiermodul (15) einen Anschluss für das flüssige Reduktionsmittel und einen Druckluftanschluss (47) aufweist, wobei zwischen Druckluftanschluss (47) und Mischkammer (35) eine Profildichtung (45) angeordnet ist, wobei die Profildichtung (45) eine Mittenbohrung aufweist, und wobei das Dosierventil (31) zwischen dem Anschluss für das flüssige Reduktionsmittel und der Mittenbohrung angeordnet ist, **dadurch gekennzeichnet, dass** in der Mittenbohrung ein Leitrohr (33) angeordnet ist und dass eine Austrittsöffnung des Leitrohrs (33) soweit in die Mischkammer (35) ragt und von einer Dichtlippe der Profildichtung (45) entfernt ist, dass eine Benetzung der Dichtlippe mit dem flüssigen Reduktionsmittel verhindert wird.

2. Dosiermodul (15) nach Anspruch 1, **dadurch gekennzeichnet, dass** das Leitrohr (33) an seinem der Mischkammer (35) gegenüberliegenden Ende gegenüber der Profildichtung (45) abgedichtet wird.

3. Dosiermodul (15) nach Anspruch 2, **dadurch gekennzeichnet, dass** das Leitrohr (33) an seinem der Mischkammer (35) gegenüberliegenden Ende einen Flansch (43) aufweist, und dass das Leitrohr (33) mit seinem Flansch (43) gegenüber der Profildichtung (45), insbesondere in einer Nut (63) der Profildichtung (45), abgedichtet wird.

4. Dosiermodul (15) nach einem der vorhergehenden Ansprüche, **dadurch gekennzeichnet, dass** die Profildichtung (45) eine Dichtlippe (51)aufweist, bei der in Richtung zur Mischkammer (35) hin die Dichtlippe (51) einen stumpfen oder höchstens rechten Winkel zu einer Außenwand der Mischkammer (35) aufweist.

5. Dosiermodul (15) nach einem der vorhergehenden Ansprüche, **dadurch gekennzeichnet, dass** das Leitrohr (33) aus Kunststoff, insbesondere Polytetrafluorethylen PTFE, Perfluorethylenpropylen FEP oder Perfluoralkoxylalkan PFA hergestellt ist.

6. Dosiermodul (15) nach einem Ansprüche 1 bis 4, **dadurch gekennzeichnet, dass** das Leitrohr (33) aus einem mit Kunststoff, insbesondere Polytetrafluorethylen PTFE, beschichteten Metallrohr hergestellt ist.

7. Dosiermodul (15) nach einem der vorhergehenden Ansprüche, **dadurch gekennzeichnet, dass** eine innere Oberfläche der Mischkammer (35) Kunststoff, insbesondere Polytetrafluorethylen PTFE, Perfluorethylenpropylen FEP oder Perfluoralkoxylalkan PFA aufweist.

8. Dosiermodul (15) nach einem der vorhergehenden Ansprüche, **dadurch gekennzeichnet, dass** die Mischkammer (35) in einer Buchse (67), insbesondere aus Kunststoff, bevorzugt aus Polytetrafluorethylen PTFE, Perfluorethylenpropylen FEP oder Perfluoralkoxylalkan PFA, ausgebildet ist.

9. Dosiermodul (15) nach Anspruch 8, **dadurch gekennzeichnet, dass** die Buchse (67) mindestens einen Strömungskanal (71) aufweist, wobei im Falle mehrerer Strömungskanäle (71) diese über den Umfang verteilt sind.

10. Dosiermodul (15) nach Anspruch 8 oder 9, **dadurch gekennzeichnet, dass** das Leitrohr (33) in der Buchse (67) geführt ist.

11. Dosiermodul (15) nach einem der Ansprüche 8 bis 10, **dadurch gekennzeichnet, dass** ein innerer Boden (68) der Buchse (67) abgeschrägt ist.

12. Verfahren zum Betreiben einer Abgasnachbehandlungsvorrichtung (3), die Abgasnachbehandlungsvorrichtung (3) umfassend ein Dosiermodul (15) mit einem Dosierventil (31) und einer Mischkammer (35) und einer Fördereinrichtung mit einer Dosierpumpe (18) nach einem der Ansprüche 1 bis 11, **dadurch gekennzeichnet, dass** das Dosierventil (31) und ein Entlüftungsventil (21) der Fördereinrichtung nach einem Abstellen des Systems zu einem Druckausgleich kurzzeitig geöffnet werden.

## Claims

1. Metering module (15) for a liquid reducing agent, in particular a urea/water solution, for mixing the liquid reducing agent with a gas, in particular air, for further introduction into an exhaust pipe (5) of an internal combustion engine (1), the metering module (15) comprising a metering valve (31) and a mixing chamber (35), the metering module (15) having a connection for the liquid reducing agent and a compressed-air connection (47), a profile seal (45) being arranged between the compressed-air connection (47) and the mixing chamber (35), the profile seal (45) having a centre bore, and the metering valve (31) being arranged between the connection for the liquid reducing agent and the centre bore, **characterized in that** a lead pipe (33) is arranged in the centre bore, and **in that** an outlet orifice of the lead pipe (33) so far projects into the mixing chamber (35) and is remote from a sealing lip of the profile seal (45) that wetting of the sealing lip with the liquid reducing agent is prevented.

2. Metering module (15) according to Claim 1, **characterized in that** the lead pipe (33), at its end lying opposite the mixing chamber (35), is sealed off with respect to the profile seal (45).

3. Metering module (15) according to Claim 2, **characterized in that** the lead pipe (33) has a flange (43) at its end lying opposite the mixing chamber (35), and **in that** the lead pipe (33) is sealed off by means of its flange (43) with respect to the profile seal (45), in particular in a groove (63) of the profile seal (45).

4. Metering module (15) according to one of the preceding claims, **characterized in that** the profile seal (45) has a sealing lip (51), whereby the sealing lip (51) has an obtuse or at most right angle to an outer wall of the mixing chamber (35) in the direction towards the mixing chamber (35).

5. Metering module (15) according to one of the preceding claims, **characterized in that** the lead pipe (33) is produced from plastic, in particular polytetrafluoroethylene PTFE, perfluoroethylenepropylene FEP or perfluoroalkoxylalkane PFA.

6. Metering module (15) according to one of Claims 1 to 4, **characterized in that** the lead pipe (33) is produced from a metal pipe coated with plastic, in particular polytetrafluoroethylene PTFE.

7. Metering module (15) according to one of the preceding claims, **characterized in that** an inner surface of the mixing chamber (35) has plastic, in particular polytetrafluoroethylene PTFE, perfluoroethylenepropylene FEP or perfluoroalkoxylalkane PFA.

8. Metering module (15) according to one of the preceding claims, **characterized in that** the mixing chamber (35) is formed in a bush (67) made, in particular from plastic, preferably from polytetrafluoroethylene PTFE, perfluoroethylenepropylene FEP or perfluoroalkoxylalkane PFA.

9. Metering module (15) according to Claim 8, **characterized in that** the bush (67) has at least one flow duct (71), in the case of a plurality of flow ducts (71) these being distributed over the circumference.

10. Metering module (15) according to Claim 8 or 9, **characterized in that** the lead pipe (33) is guided in the bush (67).

11. Metering module (15) according to one of Claims 8 to 10, **characterized in that** an inner base (68) of the bush (67) is sloped.

12. Method for operating an exhaust gas treatment device (3), the exhaust gas treatment device (3) comprising a metering module (15) with a metering valve (31), with a mixing chamber (35) and with a conveying means having a metering pump (18), according to one of Claims 1 to 11, **characterized in that** the metering valve (31) and a venting valve (21) of the conveying means are briefly opened for pressure equalization after the system has been switched off.

## Revendications

1. Module de dosage (15) pour un agent réducteur liquide, en particulier une solution d'urée et d'eau, pour le mélange de l'agent réducteur liquide avec un gaz, en particulier de l'air, pour l'introduction ultérieure dans un tuyau d'échappement (5) d'un moteur à combustion interne (1), le module de dosage (15) comportant une soupape de dosage (31) et une chambre de mélange (35), le module de dosage (15) comprenant un raccordement pour l'agent réducteur liquide et un raccordement d'air comprimé (47), un joint d'étanchéité profilé (45) étant disposé entre le raccordement d'air comprimé (47) et la chambre de mélange (35), le joint d'étanchéité profilé (45) comprenant un alésage central, et la soupape de dosage (31) étant disposée entre le raccordement pour l'agent réducteur liquide et l'alésage central, **caractérisé en ce qu'**un tube de guidage (33) est disposé dans l'alésage central, et **en ce qu'**une ouverture de sortie du tube de guidage (33) fait saillie dans la chambre de mélange (35) et est éloignée d'une lèvre d'étanchéité du joint d'étanchéité profilé (45) dans une mesure telle qu'un mouillage de la lèvre d'étanchéité avec l'agent réducteur soit empêché.

2. Module de dosage (15) selon la revendication 1, **caractérisé en ce que** le tube de guidage (33) est étanchéifié par rapport au joint d'étanchéité profilé (45) à son extrémité opposée à la chambre de mélange (35).

3. Module de dosage (15) selon la revendication 2, **caractérisé en ce que** le tube de guidage (33) comprend une collerette (43) à son extrémité opposée à la chambre de mélange (35), et **en ce que** le tube de guidage (33) est étanchéifié à l'aide de sa collerette (43) par rapport au joint d'étanchéité profilé (45), en particulier dans une rainure (63) du joint d'étanchéité profilé (45).

4. Module de dosage (15) selon l'une quelconque des revendications précédentes, **caractérisé en ce que** le joint d'étanchéité profilé (45) comprend une lèvre d'étanchéité (51), la lèvre d'étanchéité (51) présentant, dans la direction de la chambre de mélange (35), un angle obtus ou au plus droit par rapport à une paroi extérieure de la chambre de mélange (35).

5. Module de dosage (15) selon l'une quelconque des revendications précédentes, **caractérisé en ce que** le tube de guidage (33) est fabriqué en plastique, en particulier en polytétrafluoroéthylène PTFE, en perfluoroéthylènepropylène FEP ou en perfluoroalcoxyalcane PFA.

6. Module de dosage (15) selon l'une quelconque des revendications 1 à 4, **caractérisé en ce que** le tube de guidage (33) est fabriqué à partir d'un tube métallique revêtu de plastique, en particulier de polytétrafluoroéthylène PTFE.

7. Module de dosage (15) selon l'une quelconque des revendications précédentes, **caractérisé en ce qu'**une surface intérieure de la chambre de mélange (35) comprend du plastique, en particulier du polytétrafluoroéthylène PTFE, du perfluoroéthylènepropylène FEP ou du perfluoroalcoxyalcane PFA.

8. Module de dosage (15) selon l'une quelconque des revendications précédentes, **caractérisé en ce que** la chambre de mélange (35) est réalisée dans une douille (67), constituée en particulier de plastique, de préférence de polytétrafluoroéthlène PTFE, de perfluoroéthylènepropylène FEP ou de perfluoroalcoxyalcane PFA.

9. Module de dosage (15) selon la revendication 8, **caractérisé en ce que** la douille (67) comprend au moins un canal d'écoulement (71) et, dans le cas de plusieurs canaux d'écoulement (71), ceux-ci étant répartis sur la périphérie.

10. Module de dosage (15) selon la revendication 8 ou 9, **caractérisé en ce que** le tube de guidage (33) est guidé dans la douille (67).

11. Module de dosage (15) selon l'une quelconque des revendications 8 à 10, **caractérisé en ce qu'**un fond intérieur (68) de la douille (67) est biseauté.

12. Procédé de fonctionnement d'un dispositif de post-traitement des gaz d'échappement (3), le dispositif de post-traitement des gaz d'échappement (3) comportant un module de dosage (15) comprenant une soupape de dosage (31) et une chambre de mélange (35) ainsi qu'un dispositif de refoulement avec une pompe de dosage (18) selon l'une quelconque des revendications 1 à 11, **caractérisé en ce que** la soupape de dosage (31) et une soupape de purge d'air (21) du dispositif de refoulement sont ouvertes brièvement après un arrêt du système en vue d'une compensation de pression.
